# EUROPEAN PATENT APPLICATION

(11) **EP 4 834 462 A2**
(43) Date of publication of application: **04.11.2026**
(21) Application number: 25734541.3
(22) Date of filing: 28.02.2025
(51) Int. Cl.: B01D 50/40, C01B 33/107

(54) **SYSTEM FOR TREATING AMORPHOUS SILICON POWDER IN ELECTRONIC-GRADE POLYSILICON TAIL GAS**

(30) Priority: 28.12.2023 CN 202311833383
(71) Applicant: Xinjiang Daqo New Energy Co., Ltd., Shihezi, Xinjiang 832000 (CN)
(72) Inventor: ZHONG, Jiang, Shihezi, Zizhiquzhixiaxianjixingzhengquhua, Xinjiang 832000 (CN); YUAN, Chengping, Shihezi, Zizhiquzhixiaxianjixingzhengquhua, Xinjiang 832000 (CN); LUO, Jialin, Shihezi, Zizhiquzhixiaxianjixingzhengquhua, Xinjiang 832000 (CN); CHEN, Wenji, Shihezi, Zizhiquzhixiaxianjixingzhengquhua, Xinjiang 832000 (CN)
(74) Representative: Cabinet Chaillot
(86) International application number: PCT/CN2025/080076
(87) International publication number: WO 2025/140753

(57) **Abstract**

The present invention discloses a system for treating amorphous silicon powder in electronic-grade polysilicon tail gas, belonging to the technical field of polysilicon production. The main purpose is to remove amorphous silicon powder in the tail gas produced by the reduction process, thereby reducing the failure rate of equipment in the tail gas recovery unit. The main technical solution of the present invention is: a system for treating amorphous silicon powder in electronic-grade polysilicon tail gas, wherein the system comprises a tower body having an upper end connected to an exhaust pipe and a lower end connected to a filter. The separation section comprises a spraying mechanism and a cyclone separation mechanism, which are sequentially arranged from top to bottom inside the tower body. The spraying mechanism comprises a spraying structure and a packing structure, sequentially arranged from top to bottom; a tangential inlet pipe of the cyclone separation mechanism penetrates through a side wall of the tower body; and an upper outlet of the cyclone separation mechanism is provided with a cover used to prevent spraying liquid from entering the cyclone separation mechanism through the upper outlet.

## Description

### TECHNICAL FIELD

The present invention relates to the technical field of polysilicon production, and in particular to a system for treating amorphous silicon powder in electronic-grade polysilicon tail gas.

### BACKGROUND ART

Currently, electronic-grade polysilicon is produced primarily by the improved Siemens process. Due to factors such as feed ratios in the reduction furnace and differences in current and temperature at various stages, the recovered gaseous chlorosilanes contain a large quantity of amorphous silicon powder. SiHCl₃ reacts with hydrogen inside the reduction furnace through a chemical vapor deposition (CVD) reaction to produce polysilicon, with the reaction equation as follows: 3SiHCl₃+H₂→2Si+5HCl+SiCl₄. During the CVD process, gas-phase chlorosilanes, hydrogen, and large quantities of amorphous silicon powder are generated. During the process of recovering the gaseous chlorosilanes and hydrogen, the amorphous silicon powder readily causes abrasion of the condensation equipment of the tail gas recovery unit, leading to equipment leakage and blockage, and shortening the replacement cycle of wear parts in the compressors of the compressor system.

### SUMMARY OF THE INVENTION

In view of the foregoing, the present invention provides a system for treating amorphous silicon powder in electronic-grade polysilicon tail gas. The main purpose is to remove amorphous silicon powder in the tail gas produced by the reduction process, thereby reducing the failure rate of equipment in the tail gas recovery unit.

To achieve the above-mentioned objective, the present invention provides the following main technical solutions:
The present invention provides a system for treating amorphous silicon powder in electronic-grade polysilicon tail gas, the system comprising: a tower body and a separation section;
wherein the upper end of the tower body is connected to an exhaust pipe, and the lower end of the tower body is connected to a filter;
wherein the separation section comprises a spraying mechanism and a cyclone separation mechanism, the spraying mechanism and the cyclone separation mechanism being sequentially arranged from top to bottom inside the tower body; the spraying mechanism comprises a spraying structure and a packing structure sequentially arranged from top to bottom; a tangential inlet pipe of the cyclone separation mechanism penetrates through a side wall of the tower body; and the upper outlet of the cyclone separation mechanism is provided with a cover used to prevent spraying liquid from entering the cyclone separation mechanism through the upper outlet.

The objective of the present invention and the solution to its technical problem may also be further achieved by adopting the following additional technical measures.

Optionally, the cover is a spherical cover, and a rim of the spherical cover is fixedly connected to a rim of the upper outlet by means of a plurality of support rods.

Optionally, the spraying structure comprises a liquid transfer pipe and a plurality of spray pipes connected to a lower side wall of the liquid transfer pipe.

Optionally, the packing structure comprises a support plate, packing, and a packing pressure plate, sequentially arranged from bottom to top; the upper surface of the support plate is uniformly provided with a plurality of support tubes; the wall of the support tubes is uniformly provided with a plurality of ventilation holes; the upper surface of the packing pressure plate is provided with a plurality of overflow grooves; and the plurality of overflow grooves and the plurality of spray pipes are alternately staggered so as not to directly face each other.

Optionally, the lower end of the tower body is connected to the inlet end of the filter, and the outlet end of the filter is connected to a rectification unit and to the liquid transfer pipe.

Optionally, the filter comprises a first filter and a second filter connected in parallel; the outlet end of the first filter and the outlet end of the second filter are each connected to a backwash pipe; and a residue discharge port of the filter is connected to a slurry unit.

Optionally, the filter is provided with a differential pressure sensor.

By virtue of the above technical solutions, the present invention has at least the following advantages:
Tail gas exiting the reduction furnace and containing amorphous silicon powder enters the cyclone separation mechanism through the tangential inlet pipe. The heavy components and amorphous silicon powder having larger particle sizes spiral downward and settle within the shell of the cyclone separation mechanism, while the lighter components and amorphous silicon powder having smaller particle sizes are discharged together with the tail gas through the upper outlet, pass along the rim of the cover, and rise upward.

Simultaneously, the spraying structure sprays the spraying liquid, which comes into countercurrent contact with the tail gas inside the packing structure, washing away and removing the amorphous silicon powder having smaller particle sizes, while the cleaned tail gas from the reduction furnace enters the tail gas recovery unit through the exhaust pipe.

Simultaneously, because the cover covers the upper outlet of the cyclone separation mechanism, the downwardly flowing spraying liquid is prevented from entering the cyclone separation mechanism through the upper outlet. Accordingly, the spiral gas flow inside the cyclone separation mechanism is not affected by the spraying liquid, thereby ensuring that amorphous silicon powder having larger particle sizes can be smoothly separated within the cyclone separation mechanism.

Upon completion of the above treatment process, the probability of amorphous silicon powder abrading the condensation equipment is reduced, leakage is avoided, equipment blockage by silicon powder is also avoided, the replacement cycle of wear parts in the compressor is extended, and the equipment failure rate is reduced.

### BRIEF DESCRIPTION OF THE DRAWINGS

FIG. 1 is a structural schematic diagram of a system for treating amorphous silicon powder in electronic-grade polysilicon tail gas according to one embodiment of the present invention;
FIG. 2 is an enlarged view of part A in FIG. 1;
FIG. 3 is a top view of the packing pressure plate.

Reference numerals in the accompanying drawings are as follows:
Tower body 1, exhaust pipe 2, cyclone separation mechanism 3, cover 4, support rod 5, liquid transfer pipe 6, spray pipe 7, support plate 8, packing pressure plate 9, support tube 10, ventilation hole 11, overflow groove 12, first filter 13, second filter 14, backwash pipe 15, output pipe 16, main rectification pipe 17, slag discharge port 18, differential pressure sensor 19.

### DETAILED DESCRIPTION OF EMBODIMENTS

In order to more clearly illustrate the technical means and effects adopted by the present invention to achieve its intended objectives, the following detailed description of the specific embodiments, structures, features, and effects thereof according to the present application will be given in conjunction with the accompanying drawings and preferred embodiments. In the following description, each "one embodiment" or "an embodiment" does not necessarily refer to the same embodiment. Furthermore, specific features, structures, or characteristics in one or more embodiments may be combined in any suitable manner.

The present invention will be described in further detail below in conjunction with the accompanying drawings and embodiments.

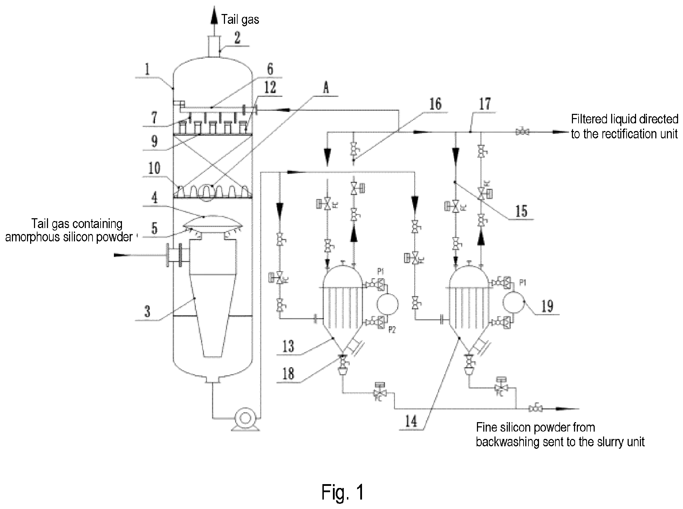

As shown in FIG. 1, one embodiment of the present invention provides a system for treating amorphous silicon powder in electronic-grade polysilicon tail gas, comprising: a tower body 1 and a separation section;
wherein the upper end of the tower body 1 is connected to the exhaust pipe 2, and the lower end of the tower body 1 is connected to a filter;
wherein the separation section comprises a spraying mechanism and a cyclone separation mechanism 3, the spraying mechanism and the cyclone separation mechanism 3 being sequentially arranged from top to bottom inside the tower body 1; the spraying mechanism comprises a spraying structure and a packing structure, sequentially arranged from top to bottom; the tangential inlet pipe of the cyclone separation mechanism 3 penetrates through the side wall of the tower body 1; and the upper outlet of the cyclone separation mechanism 3 is provided with a cover 4 used to prevent spraying liquid from entering the cyclone separation mechanism 3 through the upper outlet.

The operation of the system for treating amorphous silicon powder in electronic-grade polysilicon tail gas is as follows:
Tail gas exiting the reduction furnace and containing amorphous silicon powder enters the cyclone separation mechanism 3 through the tangential inlet pipe. The heavy components and amorphous silicon powder having larger particle sizes spiral downward and settle within the shell of the cyclone separation mechanism 3, while the lighter components and amorphous silicon powder having smaller particle sizes are discharged together with the tail gas through the upper outlet, pass along the rim of the cover 4, and rise upward.

Simultaneously, the spraying structure sprays the spraying liquid, which comes into countercurrent contact with the tail gas inside the packing structure, washing away and removing the amorphous silicon powder having smaller particle sizes, while the cleaned tail gas from the reduction furnace enters the tail gas recovery unit through the exhaust pipe 2.

Simultaneously, because the cover 4 covers the upper outlet of the cyclone separation mechanism 3, the downwardly flowing spraying liquid is prevented from entering the cyclone separation mechanism 3 through the upper outlet. Accordingly, the spiral gas flow inside the cyclone separation mechanism 3 is not affected by the spraying liquid, thereby ensuring that amorphous silicon powder having larger particle sizes can be smoothly separated within the cyclone separation mechanism 3.

Upon completion of the above treatment process, the probability of amorphous silicon powder in the tail gas abrading the condensation equipment of the tail gas recovery unit is reduced, leakage is avoided, equipment blockage by silicon powder is also avoided, the replacement cycle of wear parts in the compressor is extended, and the equipment failure rate is reduced.

Specifically, chlorosilane liquid is used as the spraying liquid.

Specifically, the cyclone separation mechanism 3 and the spraying mechanism operate in coordination with each other to efficiently remove amorphous silicon powder from the tail gas.

In a specific embodiment, the cover 4 is a spherical cover, and the rim of the spherical cover 4 is fixedly connected to the rim of the upper outlet by means of a plurality of support rods 5.

In this embodiment, specifically, the spraying liquid is sprayed onto the spherical cover 4 and flows along the curved surface of the spherical cover 4 toward the rim of the cover 4, ultimately settling toward the bottom of the tower body 1. Meanwhile, gaps exist between adjacent support rods 5, such that the tail gas from which larger silicon particles have been removed passes through these gaps, travels along the spherical cover 4, and rises upward; thus, the gas-solid separation process and the downward flow of the spraying liquid do not interfere with each other.

As shown in FIG. 1, in a specific embodiment, the spraying structure comprises a liquid transfer pipe 6 and a plurality of spray pipes 7 connected to the lower side wall of the liquid transfer pipe 6.

In this embodiment, specifically, the liquid transfer pipe 6 is arranged horizontally in the upper portion inside the tower body 1. The inlet end of the liquid transfer pipe 6 penetrates through the side wall of the tower body 1, so as to introduce the spraying liquid from outside into the tower body 1, and then spray it through the spray pipes 7 onto the packing structure.

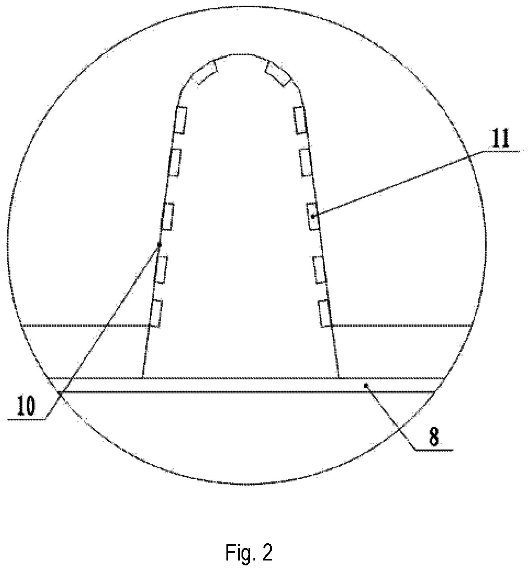

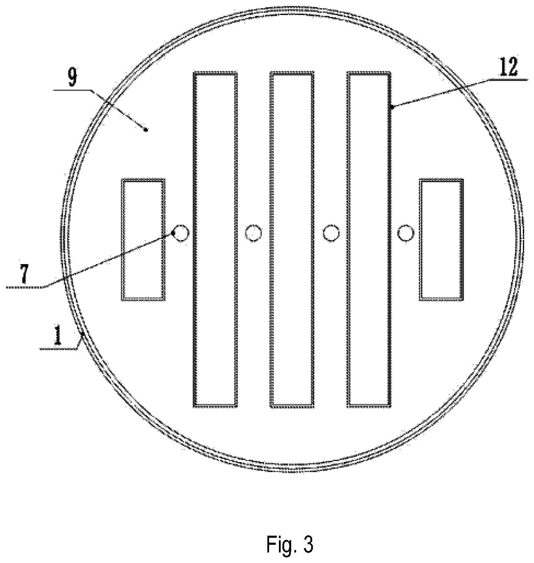

As shown in FIGs. 1 to 3, in a specific embodiment, the packing structure comprises a support plate 8, packing, and a packing pressure plate 9, sequentially arranged from bottom to top. The upper surface of the support plate 8 is uniformly provided with a plurality of support tubes 10, and the wall of the support tubes 10 is uniformly provided with a plurality of ventilation holes 11. The upper surface of the packing pressure plate 9 is provided with a plurality of overflow grooves 12, and the plurality of overflow grooves 12 and the plurality of spray pipes 7 are alternately staggered so as not to directly face each other.

In this embodiment, specifically, rectangular saddle rings are used as the packing, with specifications of 80×40×0.5 mm (outer diameter × height × thickness), a stacking count of 5,800 pcs/m³, a bulk density of 148 kg/m³, a specific surface area of 74.9 m²/m³, and a void fraction of 0.96.

In this embodiment, the surface of the support plate 8 is provided with a plurality of first mounting holes, and the lower ends of the support tubes 10 are welded into the first mounting holes. The surface of the packing pressure plate 9 is provided with a plurality of second mounting holes, and the lower ends of the overflow grooves 12 are welded into the second mounting holes. The spraying liquid discharged from the spray pipes 7 first accumulates above the packing pressure plate 9; when the level of the spraying liquid rises to the upper ends of the overflow grooves 12, the spraying liquid passes through the second mounting holes and then comes into contact with the packing.

Meanwhile, compared with the configuration in which the ventilation holes 11 are arranged directly on the support plate 8, distributing a plurality of ventilation holes 11 on the wall of the support tubes 10 enables the packing structure to accommodate a greater number of ventilation holes 11.

Specifically, the diameter of the support tubes 10 gradually decreases from top to bottom, such that the wall of the support tubes 10 can bear a portion of the weight of the accumulated packing.

By virtue of the above-described structure, the spraying liquid first comes into contact with the packing pressure plate 9, then overflows past the upper ends of the overflow grooves 12, consuming the kinetic energy of the spraying liquid as it just exits the spray pipes 7, thereby preventing the spraying liquid from violently striking the packing and damaging the stacking structure of the packing.

As shown in FIG. 1, in a specific embodiment, the lower end of the tower body 1 is connected to the inlet end of the filter, and the outlet end of the filter is connected to the rectification unit and to the liquid transfer pipe 6.

In this embodiment, specifically, by virtue of the filtering action of the filter, the silicon powder is intercepted, producing a relatively pure chlorosilane liquid component. A portion of the chlorosilane liquid enters the rectification unit for multi-stage rectification, reducing the difficulty of the rectification treatment; while another portion of the chlorosilane liquid reaches the liquid transfer pipe 6 to be reused as spraying liquid for washing the tail gas from the reduction furnace.

As shown in FIG. 1, in a specific embodiment, the filter comprises a first filter 13 and a second filter 14 connected in parallel; the outlet end of the first filter 13 and the outlet end of the second filter 14 are each connected to the backwash pipe 15; and the slag discharge port 18 of the filter is connected to the slurry unit.

In this embodiment, specifically, the upper sealed head of the first filter 13 is connected to one end of the backwash pipe 15, and the upper sealed head of the second filter 14 is connected to one end of the output pipe 16; the other end of the backwash pipe 15 and the other end of the output pipe 16 are both connected to the main rectification pipe 17.

When the differential pressure of the first filter 13 becomes large, the operator may switch operation from the first filter 13 to the second filter 14, and then open the slag discharge port 18 valve and the backwash pipe 15 valve of the first filter 13, so that the silicon powder inside the first filter 13 is washed out and discharged to the slurry unit. The slurry unit recovers the chlorosilane in the backwash liquid by heating through a screw dryer, while also safely and environmentally recovering the amorphous silicon powder in the backwash liquid, thereby restoring the cleanliness of the filter element of the first filter 13, and placing the switched-over first filter 13 in a standby state.

As shown in FIG. 1, in a specific embodiment, the filter is provided with a differential pressure sensor 19.

In this embodiment, specifically, the differential pressure sensor 19 is integrated into the DCS control system, facilitating remote control by operators of the filter differential pressure and backwash time, as well as the filter inlet valve, outlet valve, and slag discharge port 18 valve, for performing periodic backwashing and putting the filter into service.

The foregoing descriptions are only specific embodiments of the present invention, but the scope of protection of the present invention is not limited thereto. Any modifications or substitutions that a person skilled in the relevant technical field can readily conceive of within the technical scope disclosed by the present invention shall fall within the scope of protection of the present invention. Therefore, the scope of protection of the present invention shall be determined by the scope of protection set forth in the claims.

## Claims

1. A system for treating amorphous silicon powder in electronic-grade polysilicon tail gas, **characterized in that** the system comprises:
a tower body, wherein an upper end of the tower body is connected to an exhaust pipe, and a lower end of the tower body is connected to a filter;
a separation section, wherein the separation section comprises a spraying mechanism and a cyclone separation mechanism; the spraying mechanism and the cyclone separation mechanism are sequentially arranged from top to bottom inside the tower body; the spraying mechanism comprises a spraying structure and a packing structure sequentially arranged from top to bottom;
a tangential inlet pipe of the cyclone separation mechanism penetrates through a side wall of the tower body; and an upper outlet of the cyclone separation mechanism is provided with a cover used to prevent spraying liquid from entering the cyclone separation mechanism through the upper outlet.

2. The system of claim 1, **characterized in that** the cover is a spherical cover, and a rim of the spherical cover is fixedly connected to a rim of the upper outlet by means of a plurality of support rods.

3. The system of claim 1, **characterized in that** the spraying structure comprises a liquid transfer pipe and a plurality of spray pipes connected to a lower side wall of the liquid transfer pipe.

4. The system of claim 3, **characterized in that** the packing structure comprises a support plate, packing, and a packing pressure plate, sequentially arranged from bottom to top; an upper surface of the support plate is uniformly provided with a plurality of support tubes; a wall of the support tubes is uniformly provided with a plurality of ventilation holes; an upper surface of the packing pressure plate is provided with a plurality of overflow grooves; and the plurality of overflow grooves and the plurality of spray pipes are alternately staggered so as not to directly face each other.

5. The system of claim 3, **characterized in that** the lower end of the tower body is connected to an inlet end of the filter, and an outlet end of the filter is connected to a rectification unit and to the liquid transfer pipe.

6. The system of claim 5, **characterized in that** the filter comprises a first filter and a second filter connected in parallel; an outlet end of the first filter and an outlet end of the second filter are each connected to a backwash pipe; and a slag discharge port of the filter is connected to a slurry unit.

7. The system of claim 5, **characterized in that** the filter is provided with a differential pressure sensor.
